(19) Europäisches Patentamt
European Patent Office
Office européen des brevets

(11) **EP 2 952 287 B1**

(12) **EUROPEAN PATENT SPECIFICATION**

(45) Date of publication and mention
of the grant of the patent:
**16.08.2017 Bulletin 2017/33**

(51) Int Cl.:
*B23K 35/365* (2006.01)     *B23K 35/30* (2006.01)
*B23K 35/40* (2006.01)      *B23K 35/36* (2006.01)
*C22C 38/00* (2006.01)      *C22C 38/02* (2006.01)
*C22C 38/04* (2006.01)      *C22C 38/22* (2006.01)
*C22C 38/24* (2006.01)      *C22C 38/26* (2006.01)
*C22C 38/32* (2006.01)

(21) Application number: **13873506.3**

(22) Date of filing: **25.12.2013**

(86) International application number:
**PCT/JP2013/084621**

(87) International publication number:
**WO 2014/119189 (07.08.2014 Gazette 2014/32)**

(54) **COVERED ELECTRODE**

BESCHICHTETE ELEKTRODE

ÉLECTRODE REVÊTUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2013 JP 2013019561**

(43) Date of publication of application:
**09.12.2015 Bulletin 2015/50**

(73) Proprietor: **Kabushiki Kaisha Kobe Seiko Sho
(Kobe Steel, Ltd.)
Kobe-shi, Hyogo 651-8585 (JP)**

(72) Inventors:
• **TANIGUCHI, Genichi
  Kanagawa 251-0014 (JP)**
• **YAMASHITA, Ken
  Kanagawa 251-0014 (JP)**
• **OTSU, Minoru
  Kanagawa 251-0014 (JP)**
• **SAKATA, Mikihiro
  Kanagawa 251-0014 (JP)**
• **NAKO, Hidenori
  Kobe-shi
  Hyogo 651-2271 (JP)**

(74) Representative: **Müller-Boré & Partner
Patentanwälte PartG mbB
Friedenheimer Brücke 21
80639 München (DE)**

(56) References cited:
EP-A1- 0 626 227      WO-A1-2012/124529
JP-A- H02 220 797     JP-A- H10 137 975
JP-A- S62 224 497     JP-A- 2008 229 718

## Description

Technical Field

The present invention relates to a covered electrode used for welding of 2.25Cr-1Mo-V steel for use in pressure vessels, such as petroleum refining reactors, in energy plants.

Background Art

2.25Cr-1Mo steel has been used for pressure vessels, such as petroleum refining reactors. However, in order to improve operation efficiency, higher-strength 2.25Cr-1Mo-V steel are being applied as steel that can withstand increased design temperatures and pressures. Covered electrodes or weld metals that have good creep rupture properties and toughness are being developed as covered electrodes or weld metals used for welding of 2.25Cr-1Mo-V steel for use in such petroleum refining reactors.

For example, in Patent Literature 1, the addition of Nb, Co, and W secures the creep strength of weld metal containing Cr: 2.00% to 3.25% by mass and V: 0.20% to 0.70% by mass formed by shielded metal-arc welding. In Patent Literature 2, the addition of Co, W, and Ni secures the creep strength and toughness of an electrode containing Cr: 1.00% to 3.50% by mass, V: 0.1% to 1.0% by mass, and Nb: 0.02% to 0.50% by mass of the total mass of the electrode. In Patent Literature 3, the addition of Nb and Ta secures the creep strength of an electrode containing Cr: 1.00% to 3.50% by mass, V: 0.01% to 0.60% by mass, and W: 0.6% to 2.5% by mass by mass of the total mass of the electrode. Patent Literature 4 discloses a submerged arc welding method for a high strength Cr-Mo steel (by mass-% Cr: 2.00-3.25%; Mo: 0.90-1.20%; and V) using a covered electrode, which provides good creep strength, toughness, Sr crack resistance.

Citation List

Patent Literature

PTL 1: Japanese Unexamined Patent Application Publication No. 10-137975
PTL 2: Japanese Unexamined Patent Application Publication No. 2002-263883
PTL 3: Japanese Unexamined Patent Application Publication No. 2001-300768
PTL 4: European Patent Application No. 0 626 227 A1.

Summary of Invention

Technical Problem

However, the related art has the following problems.

Welding materials used for welding of steel for use in petroleum refining reactors should satisfy good creep properties and additional properties, such as toughness, temper embrittlement characteristics, SR cracking resistance (resistance to intergranular fracture during stress relief annealing), and welding performance. Thus, 2.25Cr-1Mo-V steel reactors having higher strength than 2.25Cr-1Mo steel are being applied, as described above. However, also in 2.25Cr-1Mo-V steel reactors, the operating temperatures and pressures tend to be increased. Thus, there is a problem that existing welding materials cannot meet recent demands for high-temperature strength, particularly creep rupture properties.

In Patent Literature 1, the post-weld heat treatment (PWHT) conditions include a low temperature and a short time of 700°C x 26 h, and the creep test conditions include a low temperature and a low stress of 538°C/207 MPa. These conditions cannot accommodate recent market demands. In Patent Literature 2, the PWHT conditions include a high holding temperature but a short holding time of 740°C x 1 h, and the creep test conditions include 600°C/140 MPa. These test conditions cannot accommodate recent market demands. In Patent Literature 3, the PWHT conditions include a low holding temperature and a short holding time of 690°C x 1 h, and the creep test conditions include 600°C/140 MPa. These test conditions cannot accommodate recent market demands.

The related art for increasing the creep rupture strength of Cr-Mo steel weld metal includes a method for adding a strong carbide formation element, such as V, Nb, Ta, and/or W, or a solid-solution strengthening element, such as Co, to the major component Cr-Mo. However, such a method results in low cracking resistance due to low impact toughness and increased hardness.

The present invention has been made in consideration of such problems. It is an object of the present invention to provide a covered electrode that has good creep properties and additional properties, such as toughness, temper embrittlement characteristics, SR cracking resistance, and welding performance.

Solution to Problem

As a result of extensive studies, the present inventors obtained the following findings.

The present inventors got ideas of (1) carbide precipitation morphology control and (2) microstructure control as means for improving creep properties of 2.25Cr-1Mo-V steel deposited metal having good creep strength as well as good toughness, temper embrittlement characteristics, and SR cracking resistance in the formation of the 2.25Cr-1Mo-V steel deposited metal.

The microstructure of 2.25Cr-1Mo-V steel and deposited metal thereof is composed mainly of bainite. The creep deformation behavior of 2.25Cr-1Mo-V steel and deposited metal thereof depends predominantly on creep diffusion of dislocation and a slip at a prior $\gamma$ grain boundary and a bainite block/packet/lath boundary in crystal grains. Dispersion and precipitation of fine carbide that prevents creep diffusion of dislocation in crystal grains are effective in suppressing the creep diffusion of dislocation. Dispersion and precipitation of carbide that prevents a slip at prior $\gamma$ grain boundaries and a decrease in the number of slip sites, that is, coarsening of the microstructure are effective in suppressing a slip at the boundaries.

The addition of an alloying element that preferentially forms fine carbide in crystal grains is effective in achieving (1) described above. C and V are focused on in the present application. These alloying elements may be incorporated from one or both of a core wire and a covering of covered electrodes.

The addition of an alloying element that preferentially forms a carbide in prior $\gamma$ grain boundaries and prevents a slip, the addition of an alloying element that lowers hardenability, and a decrease in the amount of alloying element that increases hardenability are effective in achieving (2) described above. Cr and Mn are focused on in the present application. In particular, it was found that a modest decrease in the amount of Cr promotes precipitation of fine carbide in crystal grains during heat treatment, and the pinning effect of the fine carbide is effective in suppressing the diffusion of creep dislocation. These alloying elements are incorporated in the same manner as described above.

Unlike the present application, the related art did not suggest that creep rupture strength is dramatically improved at low Cr contents in deposited metal for high-strength 2.25Cr-1Mo-V steel, that is, a decrease in the amount of alloying element improves creep rupture strength.

None of welding materials of the related art can meet the latest unprecedentedly strict market demands for creep characteristics, that is, "PWHT conditions: 705°C x 32 h, creep rupture test conditions: 540°C/210 MPa".

A covered electrode according to the present invention contains, based on the total mass of the covered electrode, 5% to 10% by mass metal carbonate on a $CO_2$ basis, 0.4% to 2.0% by mass alkali metal oxide on an alkali metal basis, and 1.0% to 5.0% by mass fluorine compound on a F basis in a covering of the covered electrode, and C: 0.04% to 0.15% by mass, Si: 1.0% to 1.5% by mass, Mn: 0.7% to 1.2% by mass, Cr: 1.3% to 1.9% by mass, Mo: 0.5% to 1.0% by mass, V: 0.3% to 0.5% by mass, Nb: 0.02% to 0.06% by mass, B: 0.005% to 0.015% by mass, Mg: 0.05% to 0.15% by mass, and Fe: 60% to 75% by mass in one of a core wire and the covering of the covered electrode or in both of the core wire and the covering in total, and incidental impurities, the incidental impurities being 0.10% or less by mass Cu, Ni, Ti, Al, Ta, Co, and W in total and 0.10% or less by mass S, Sn, As, Sb, Pb, and Bi in total.

A covered electrode having such a structure contains a predetermined amount of metal carbonate in the covering, thereby protecting weld beads, decreasing the hydrogen partial pressure in an arc atmosphere, and decreasing the amount of diffusible hydrogen in deposited metal. The predetermined amount of the alkali metal oxide in the covering imparts good welding performance to the covered electrode. The predetermined amount of the fluorine compound in the covering functions as a slag forming agent without affecting the bead shape.

Furthermore, the predetermined amounts of the predetermined components in one or both of the core wire and the covering of the covered electrode improve the creep rupture properties, toughness, temper embrittlement characteristics, and SR cracking resistance of weld metal, and welding performance. The welding performance includes arc stability, the amount of spatter, slag detachability, bead wetting, and bead appearance.

A covered electrode according to the present invention preferably contains, based on the total mass of the covered electrode, C: 0.05% to 0.10% by mass, Si: 1.0% to 1.3% by mass, Mn: 0.8% to 1.2% by mass, Cr: 1.3% to 1.9% by mass, Mo: 0.5% to 1.0% by mass, V: 0.3% to 0.5% by mass, Nb: 0.02% to 0.06% by mass, B: 0.005% to 0.015% by mass, Mg: 0.05% to 0.10% by mass, and Fe: 60% to 75% by mass in one of a core wire and a covering of the covered electrode or in both of the core wire and the covering in total, and incidental impurities, the incidental impurities being 0.10% or less by mass Cu, Ni, Ti, Al, Ta, Co, and W in total and 0.10% or less by mass S, Sn, As, Sb, Pb, and Bi in total.

In such a structure, the further limited component ranges in one or both of the core wire and the covering of the covered electrode can further improve the creep rupture properties, toughness, temper embrittlement characteristics, and SR cracking resistance of weld metal, and welding performance.

Advantageous Effects of Invention

A covered electrode according to the present invention can produce weld metal having good creep rupture properties, toughness, temper embrittlement characteristics, and SR cracking resistance. A covered electrode according to the present invention has good welding performance.

Brief Description of Drawings

[Fig. 1A] Fig. 1A is a schematic view of the groove shape of a weld specimen used in the examples of the present invention.
[Fig. 1B] Fig. 1B is a schematic view of the groove shape of a weld specimen used in the examples of the present invention.
[Fig. 2] Fig. 2 is a graph of the PWHT conditions in the examples of the present invention.
[Fig. 3] Fig. 3 is a graph of the step cooling treatment conditions in the examples of the present invention.
[Fig. 4A] Fig. 4A is a schematic view of a test specimen used in the evaluation of SR cracking resistance in the examples of the present invention.
[Fig. 4B] Fig. 4B is a schematic view of a test specimen used in the evaluation of SR cracking resistance in the examples of the present invention.
[Fig. 4C] Fig. 4C is a schematic view of a test specimen used in the evaluation of SR cracking resistance in the examples of the present invention.
[Fig. 4D] Fig. 4D is a schematic view of a test specimen used in the evaluation of SR cracking resistance in the examples of the present invention.
[Fig. 5] Fig. 5 is a graph of the SR conditions for the evaluation of SR cracking resistance in the examples of the present invention.

Description of Embodiments

The embodiments of the present invention will be described in detail below.
A covered electrode according to the present invention contains, based on the total mass of the covered electrode, 5% to 10% by mass metal carbonate on a $CO_2$ basis, 0.4% to 2.0% by mass alkali metal oxide on an alkali metal basis, and 1.0% to 5.0% by mass fluorine compound on a F basis in a covering of the covered electrode.
The covered electrode further contains, based on the total mass of the covered electrode, predetermined amounts of C, Si, Mn, Cr, Mo, V, Nb, B, Mg, and Fe in one of a core wire and the covering of the covered electrode or in both of the core wire and the covering in total, and incidental impurities. The incidental impurities are not more than a predetermined amount of Cu, Ni, Ti, Al, Ta, Co, and W in total and not more than a predetermined amount of S, Sn, As, Sb, Pb, and Bi in total.
The components will be described below.

[Metal Carbonate, Alkali Metal Oxide, and Fluorine Compound in Covering based on Total Mass of Covered Electrode]

<Metal carbonate: 5% to 10% by mass on $CO_2$ basis>

The metal carbonate is decomposed into a metal oxide and $CO_2$ by arc heat. The former forms slag and protects a weld bead. The latter decreases the hydrogen partial pressure in the arc atmosphere and decreases the amount of diffusible hydrogen in deposited metal. Thus, the metal carbonate is added to the covering. The metal carbonate may be, but is not limited to, $MgCO_3$, $CaCO_3$, $BaCO_3$, or $Na_2CO_3$. However, an excessively low metal carbonate content results in not only an insufficient amount of slag and a poor bead appearance but also an increased amount of diffusible hydrogen in deposited metal and increased cold cracking susceptibility. In particular, an increased amount of diffusible hydrogen in deposited metal causes a serious problem with respect to the application of high-strength steel, such as high-strength 2.25C-1Mo-V steel in the present application. On the other hand, an excessively high metal carbonate content results in high viscosity of molten slag and tends to result in leading of molten slag, thus resulting in poor weld bead wetting and inducing weld defects, such as slag inclusion. Thus, the metal carbonate content based on the total mass of the covered electrode ranges from 5% to 10% by mass on a $CO_2$ basis.

<Alkali metal oxide: 0.4% to 2.0% by mass on alkali metal basis>

The alkali metal oxide functions as a binder for forming a cover and is contained in a water glass, which is added to the covering in order to adhere the cover to the core wire. The alkali metal oxide may have a chemical composition of $Na_2O$, $K_2O$, or $Li_2O$. These alkali metal oxides also affect the welding performance of the covered electrode. An excessively small or large amount of the alkali metal oxide or an excessively small or large amount of the water glass adversely affects welding performance, particularly arc stability. Thus, the alkali metal oxide content based on the total mass of the covered electrode ranges from 0.4% to 2.0% by mass on an alkali metal basis.

<Fluorine compound: 1.0% to 5.0% by mass on F basis>

The fluorine compound is added to the covering as a slag forming agent. The fluorine compound may be, but is not limited to, a metal fluoride exemplified by $BaF_2$, $CaF_2$, KF, NaF, or $AlF_3$, or a complex metal fluoride or polymer exemplified by $K_2SiF_6$ or PTFE. However, an excessively low or high fluorine compound content adversely affects the bead shape. Thus, the fluorine compound content based on the total mass of the covered electrode ranges from 1.0% to 5.0% by mass on a F basis.

[Predetermined Amounts of Predetermined Elements based on Total Mass of Covered Electrode in One of Core Wire and Covering of Covered Electrode or in Both Thereof In Total]

<C: 0.04% to 0.15% by mass>

C has strong effects on the hardenability of deposited metal and the precipitation form of carbide. A low C content of deposited metal results in a high bainite transformation temperature, coarsening of a bainite microstructure, and low toughness and poor temper embrittlement characteristics. A low C content of deposited metal also results in insufficient precipitation of carbide and low creep rupture strength. On the other hand, an excessively high C content results in increased precipitation of carbide and increased creep strength but results in promotion of coarsening of precipitated carbide, low toughness and poor temper embrittlement characteristics, and increased cracking susceptibility, such as hot cracking, cold cracking, and SR cracking. This also results in low arc stability. Thus, the C content based on the total mass of the covered electrode ranges from 0.04% to 0.15% by mass. Preferably, the lower limit is 0.05% by mass, and the upper limit is 0.10% by mass.

<Si: 1.0% to 1.5% by mass>

Si is effective in securing the room temperature strength of deposited metal and improving the toughness of the deposited metal by deoxidation and purification. An excessively low Si content of deposited metal results in low creep strength of the deposited metal and also results in low toughness due to an increased oxygen content of the deposited metal and formation of coarse oxide. An excessively low Si content of deposited metal also results in poor bead wetting and a poor bead appearance. On the other hand, an excessive addition of Si results in poor temper embrittlement characteristics. Thus, the Si content based on the total mass of the covered electrode ranges from 1.0% to 1.5% by mass. Preferably, the lower limit is 1.0% by mass, and the upper limit is 1.3% by mass.

<Mn: 0.7% to 1.2% by mass>

Mn is effective after C in decreasing the bainite transformation temperature of deposited metal. The addition of Mn can decrease the bainite transformation point to form a fine structure and improve toughness. On the other hand, the addition of Mn has a contradictory effect of decreasing creep strength due to an increase in the number of slip sites associated with the finer microstructure. Like Si, Mn improves the toughness of deposited metal by deoxidation and purification, but an excessive addition of Mn results in poor temper embrittlement characteristics. Thus, in order to satisfy both the toughness and temper embrittlement characteristics and the creep rupture strength of deposited metal, the Mn content ranges from 0.7% to 1.2% by mass based on the total mass of the covered electrode. Preferably, the lower limit is 0.8% by mass, and the upper limit is 1.2% by mass.

<Cr: 1.3% to 1.9% by mass>

Cr, together with Mo and V, constitutes the base components of high-strength 2.25Cr-1Mo-V steel. Cr is an indispensable component for improving room temperature strength and creep strength by preferentially forming carbide in prior $\gamma$ grain boundaries and for improving corrosion resistance. The studies by the present inventors showed that a decrease in Cr content results in promotion of precipitation of fine carbide, and an increase in Cr content results in promotion of precipitation of coarse carbide. An excessively low Cr content of deposited metal results in not only low toughness due to excessive precipitation of fine carbide but also low SR cracking resistance. On the other hand, an excessively high Cr content results in not only low toughness and creep strength due to coarsening of precipitated carbide but also poor temper embrittlement characteristics and low SR cracking resistance due to promotion of grain boundary segregation of impurities. Thus, the Cr content based on the total mass of the covered electrode ranges from 1.3% to 1.9% by mass.

<Mo: 0.5% to 1.0% by mass>

Mo, together with Cr and V, constitutes the base components of high-strength 2.25Cr-1Mo-V steel. Mo forms carbide and dissolves in a main phase, thereby improving the room temperature strength and creep rupture strength of the main phase. An excessively low Mo content of deposited metal results in low creep rupture strength due to insufficient carbide precipitation and insufficient solid solution in the main phase. On the other hand, an excessively high Mo content results in excessively high strength and low toughness due to excessive increases in carbide content and in solid solution in the main phase. Thus, the Mo content based on the total mass of the covered electrode ranges from 0.5% to 1.0% by mass.

<V: 0.3% to 0.5% by mass>

V, together with Cr and Mo, constitutes the base components of high-strength 2.25Cr-1Mo-V steel. V forms fine carbide and thereby prevents creep diffusion of dislocation and improves room temperature strength and creep rupture strength. An excessively low V content of deposited metal results in low creep rupture strength due to insufficient carbide precipitation. On the other hand, an excessively high V content results in an excessive increase in carbide precipitation and low toughness, poor temper embrittlement characteristics, and low SR cracking resistance. An excessively high V content also results in low arc stability, an increased amount of spatter, and a poor bead appearance. Thus, the V content based on the total mass of the covered electrode ranges from 0.3% to 0.5% by mass.

<Nb: 0.02% to 0.06% by mass>

Like V, Nb tends to form fine carbide and improves creep strength. An excessively low Nb content of deposited metal results in low creep strength due to insufficient carbide precipitation. On the other hand, an excessively high Nb content results in an excessive increase in carbide precipitation and low toughness, poor temper embrittlement characteristics, and low SR cracking resistance. An excessively high Nb content also results in an increased amount of spatter. Thus, the Nb content based on the total mass of the covered electrode ranges from 0.02% to 0.06% by mass.

<B: 0.005% to 0.015% by mass>

The addition of a minute amount of B is effective in improving the hardenability of deposited metal, making the microstructure finer and thereby improving toughness, and improving creep strength. An excessively low B content of deposited metal results in low toughness due to coarsening of the microstructure and results in low creep rupture strength. An excessively high B content results in very low SR cracking resistance. Thus, the B content based on the total mass of the covered electrode ranges from 0.005% to 0.015% by mass.

<Mg: 0.05% to 0.15% by mass>

Mg improves the toughness of deposited metal by deoxidation and purification and improves arc stability and rearcing properties during welding. An excessively low Mg content of deposited metal results in an increased oxygen content of the deposited metal, formation of coarse oxide, and low toughness, as well as low arc stability and an increased amount of spatter. On the other hand, an increased Mg content also results in low arc stability, an increased amount of spatter, and a poor bead appearance. Thus, the Mg content based on the total mass of the covered electrode ranges from 0.05% to 0.15% by mass. Preferably, the lower limit is 0.05% by mass, and the upper limit is 0.10% by mass.

<Fe: 60% to 75% by mass>

Fe is a main component of deposited metal and may be mostly incorporated from the core wire of the covered electrode. Fe may be incorporated from the covering. In particular, Fe in the form of an iron powder or ferroalloy incorporated from the covering can increase welding efficiency. The addition of an excessively small or large amount of Fe results in insufficient effects of addition of other alloy components. Thus, the Fe content ranges from 60% to 75% by mass based on the total mass of the covered electrode. An Fe content of less than 60% by mass results in low slag detachability and a poor bead appearance.

<Incidental Impurities>

In the present invention, incidental impurities are 0.10% or less by mass Cu, Ni, Ti, Al, Ta, Co, and W in total and 0.10% or less by mass S, Sn, As, Sb, Pb, and Bi in total.

Cu, Ni, Ti, Al, Ta, Co, and W contribute to reinforcement of deposited metal as solid-solution strengthening elements or carbonitride forming elements. However, in view of the design of a welding material in the present application, these elements are present as incidental impurities in deposited metal and reduce the effects of the addition of main alloy components. Thus, the total amount of these incidental impurities is 0.10% or less by mass. Although the lower limit is not particularly limited, the limit of measurement is 0.03% by mass, for example.

When the total amount of Cu, Ni, Ti, Al, Ta, Co, and W is more than 0.10% by mass, this results in an increased amount of spatter. When the total amount of Cu, Ni, Ti, Al, Ta, Co, and W is more than 1.00% by mass, this also results in low arc stability.

S, Sn, As, Sb, Pb, and Bi are present as incidental impurities in deposited metal and decrease grain boundary strength and impair temper embrittlement characteristics and SR cracking resistance. Thus, the total amount of these incidental impurities is 0.10% or less by mass. Although the lower limit is not particularly limited, the limit of measurement is 0.01% by mass, for example.

EXAMPLES

The advantages of the present invention will be described below by comparing examples within the scope of the present invention with comparative examples outside the scope of the present invention.

[Chemical Components of Covered Electrode]

A covered electrode was composed of a solid core wire and a covering. The mass (= coverage) of the covering ranged from 25% to 40% by mass based on the total mass of the covered electrode. Tables 1 and 2 list the chemical compositions of covered electrodes. The underlined values are outside the scope of the present invention.

[Table 1]

| | No. | Chemical composition ot covered electrode (mass%) | | | | | | | | | | | | | | | |
|---|---|---|---|---|---|---|---|---|---|---|---|---|---|---|---|---|---|
| | | Slag components | | | | | | | | | | | | | | | |
| | | Metal carbonate | | | | | | Alkali metal oxide | | | | Metal fluoride | | | | | |
| | | $CaCO_3$ | $BaCO_3$ | $SrCO_3$ | $MgCO_3$ | $Na_2CO_3$ | $CO_2$ basis | $K_2O$ | $Na_2O$ | $Li_2O$ | Alkali metal basis | $CaF_2$ | $BaF_2$ | KF | NaF | $AlF_3$ | $K_2SiF_6$ | F basis |
| Examples | 1 | 12.3 | 1.7 | 1.2 | 0.0 | 0.0 | 6 | 0.6 | 0.3 | 0.0 | 1.1 | 6.3 | 0.6 | 0.0 | 0.0 | 0.0 | 0.0 | 3.2 |
| | 2 | 10.9 | 1.3 | 2.U | 0.0 | 0.0 | 6 | 0.6 | 0.6 | 0.3 | 1.1 | 5.4 | 0.9 | 0.0 | 0.0 | 0.0 | 0.0 | 2.8 |
| | 3 | 12.5 | 3.5 | 0.0 | 2.5 | 0.0 | 8 | 0.3 | 0.4 | 0.0 | 0.6 | 7.3 | 0.6 | 1.3 | 0.0 | 0.0 | 0.0 | 4.1 |
| | 4 | 11.3 | 4.0 | 0.0 | 0.0 | 3.9 | 7 | 0.4 | 0.5 | 0.0 | 0.7 | 6.7 | 0.4 | 0.0 | 1.3 | 0.0 | 0.0 | 3.9 |
| | b | 11.3 | 0.2 | 0.3 | 0.0 | 0.0 | b | 0.4 | 0.5 | 0.1 | 0.8 | 7.8 | 1.2 | 0.0 | 0.0 | 0.0 | 0.0 | 4.1 |
| | 6 | 10.6 | 0.0 | 0.0 | 0.6 | 0.8 | 5 | 0.5 | 0.6 | 0.0 | 0.8 | 7.7 | 2.4 | 0.0 | 0.0 | 0.3 | 0.0 | 4.5 |
| | 7 | 11.8 | 2.4 | 0.0 | 0.0 | 1.5 | 6 | 0.7 | 0.8 | 0.2 | 1.3 | 6.8 | 4.8 | 0.0 | 0.0 | 0.0 | 0.1 | 4.4 |
| | 8 | 12.5 | 1.7 | 1.4 | 0.6 | 0.0 | 7 | 0.4 | 0.5 | 0.0 | 0.7 | 6.3 | 0.6 | 0.0 | 0.0 | 0.0 | 0.0 | 3.2 |
| | 9 | 12.1 | 2.6 | 2.4 | 0.8 | 0.0 | 7 | 0.8 | 0.4 | 0.0 | 1.0 | 6.0 | 1.6 | 1.7 | 0.0 | 0.0 | 0.0 | 3.8 |
| | 1u | 11.8 | 2.8 | 3.6 | 0.0 | 0.2 | 7 | 0.7 | 0.6 | 0.3 | 1.1 | 6.7 | 0.7 | 0.0 | 0.0 | 0.2 | 0.0 | 3.6 |
| | 11 | 5.5 | 0.3 | 1.1 | 0.0 | 0.0 | 3 | 0.4 | 0.5 | 0.1 | 0.8 | 7.0 | 0.9 | 0.0 | 0.0 | 0.0 | 0.0 | 3.6 |
| | 12 | 17.8 | 0.0 | 4.6 | 5.1 | 0.0 | 12 | 0.7 | 0.1 | 0.3 | 0.8 | 4.5 | 0.3 | 0.6 | 0.0 | 0.0 | 0.0 | 2.5 |
| | 13 | 11.7 | 1.0 | 1.5 | 0.0 | 0.0 | 6 | 0.1 | 0.2 | 0.0 | 0.2 | 4.b | 0.8 | 0.0 | 0.0 | 0.0 | 0.0 | 2.4 |
| | 14 | 11.6 | 2.2 | 3.1 | 0.0 | 0.0 | 7 | 1.5 | 1.8 | 0.0 | 2.5 | 7.5 | 0.0 | 0.0 | 0.0 | 0.5 | 0.0 | 4.0 |
| | 15 | 14.7 | 2.3 | 2.5 | 0.0 | 0.0 | 8 | 0.6 | 0.6 | 0.0 | 0.9 | 1.4 | 0.5 | 0.0 | 0.0 | 0.0 | 0.0 | 0.8 |
| | 16 | 8.3 | 5.5 | 0.3 | 0.0 | 0.0 | b | 0.8 | 0.5 | 0.2 | 1.1 | 7.0 | 2.6 | 0.0 | 0.0 | 2.1 | 0.0 | 5.4 |
| | 17 | 13.6 | 3.9 | 2.1 | 0.0 | 0.0 | 7 | 0.4 | 0.5 | 0.0 | 0.7 | 5.7 | 1.0 | 0.9 | 0.0 | 0.0 | 0.0 | 3.3 |
| | 18 | 13.1 | 1.9 | 0.4 | 2.4 | 0.0 | 8 | 0.9 | 0.4 | 0.3 | 1.2 | 6.0 | 0.6 | 0.0 | 0.0 | 0.4 | 0.0 | 3.3 |
| | 19 | 14.3 | 2.6 | 0.8 | 0.0 | 0.0 | 7 | 0.9 | 0.6 | 0.2 | 1.3 | 8.9 | 1.3 | 0.0 | 0.0 | 0.0 | 0.0 | 4.6 |
| | 20 | 12.0 | 0.0 | 0.0 | 3.2 | 0.3 | 7 | 0.7 | 0.8 | 0.0 | 1.2 | 6.7 | 0.9 | 0.0 | 0.0 | 0.0 | 0.0 | 3.4 |
| | 21 | 12.6 | 0.0 | 1.2 | 2.9 | 0.3 | 8 | 0.6 | 0.6 | 0.0 | 0.9 | 3.5 | 0.7 | 0.0 | 0.0 | 0.0 | 0.0 | 1.9 |

(continued)

| | No. | Chemical composition ot covered electrode (mass%) | | | | | | | | | | | | | | | | |
| | | Slag components | | | | | | | | | | | | | | | | |
| | | Metal carbonate | | | | | | Alkali metal oxide | | | | Metal fluoride | | | | | | |
| | | CaCO$_3$ | BaCO$_3$ | SrCO$_3$ | MgCO$_3$ | Na$_2$CO$_3$ | CO$_2$ basis | K$_2$O | Na$_2$O | Li$_2$O | Alkali metal basis | CaF$_2$ | BaF$_2$ | KF | NaF | AlF$_3$ | K$_2$SiF$_6$ | F basis |
| Comparative examples | 22 | 14.3 | 3.6 | 2.2 | 0.0 | 0.0 | 8 | 0.6 | 0.2 | 1.0 | 1.1 | 5.5 | 0.9 | 0.0 | 0.8 | 0.0 | 0.0 | 3.2 |
| | 23 | 12.4 | 5.4 | 0.0 | 0.0 | 0.0 | 7 | 0.4 | 1.0 | 0.0 | 1.1 | 6.6 | 3.U | 0.0 | 0.0 | 0.0 | 0.0 | 3.9 |
| | 24 | 12.9 | 0.0 | 0.3 | 0.2 | 0.0 | 6 | 0.6 | 0.6 | 0.0 | 0.9 | 6.6 | 0.8 | 0.0 | 0.0 | 0.0 | 0.0 | 3.4 |
| | 25 | 12.7 | 0.9 | 0.0 | 0.0 | 0.0 | 6 | 0.5 | 0.5 | 0.0 | 0.8 | 7.4 | 1.6 | 0.0 | 0.0 | 0.0 | 0.3 | 4.1 |
| | 26 | 11.6 | 3.4 | 2.5 | 0.0 | 0.0 | 7 | 0.6 | 0.4 | 0.0 | 0.8 | 8.1 | 0.5 | 0.0 | 0.0 | 0.0 | 0.0 | 4.1 |
| | 27 | 10.9 | 0.0 | 1.8 | 4.2 | 0.6 | 8 | 0.4 | 0.4 | 0.5 | 0.8 | 7.6 | 0.5 | 0.0 | 0.0 | 0.0 | 0.0 | 3.8 |
| | 28 | 13.5 | 3.0 | 0.8 | 0.0 | 0.0 | 7 | 0.6 | 0.8 | 0.8 | 1.5 | 8.7 | 0.7 | 0.0 | 0.0 | 0.0 | 1.1 | 4.9 |
| | 29 | 12.6 | 0.4 | 0.0 | 2.2 | 0.0 | 7 | 0.7 | 0.6 | 0.0 | 1.1 | 8.0 | 1.3 | 1.6 | 0.0 | 0.0 | 0.0 | 4.7 |
| | 30 | 15.6 | 2.8 | 0.0 | 0.0 | 0.0 | 7 | 0.9 | 0.5 | 0.0 | 1.1 | 3.7 | 2.3 | 0.0 | 0.0 | 0.0 | 0.0 | 2.3 |
| | 31 | 15.0 | 4.2 | 1.3 | 0.0 | 0.0 | 8 | 0.9 | 0.1 | 0.9 | 1.3 | 4.5 | 2.4 | 0.0 | 0.0 | 0.0 | 0.0 | 2.7 |
| | 32 | 15.0 | 0.0 | 0.5 | 3.3 | 0.6 | 9 | 0.6 | 0.5 | 0.0 | 0.9 | 7.5 | 0.6 | 0.0 | 0.0 | 1.2 | 0.0 | 4.6 |
| | 33 | 12.9 | 6.9 | 0.0 | 0.0 | 0.0 | 7 | 0.5 | 0.3 | 0.0 | 0.6 | 5.2 | 1.6 | 0.0 | 0.0 | 0.0 | 0.0 | 2.9 |
| | 34 | 11.6 | 0.0 | 2.2 | 3.1 | 0.7 | 8 | 0.9 | 0.8 | 1.1 | 1.8 | 6.9 | 0.8 | 0.6 | 0.0 | 0.0 | 0.0 | 3.7 |
| | 35 | 15.1 | 1.5 | 0.0 | 0.0 | 1.1 | 7 | 0.9 | 0.3 | 0.0 | 0.9 | 7.8 | 1.6 | 0.0 | 0.0 | 0.0 | 0.5 | 4.4 |
| | 36 | 10.5 | 0.4 | 1.2 | 0.0 | 0.0 | 5 | 0.5 | 0.3 | 0.0 | 0.7 | 3.6 | 0.4 | 0.0 | 0.0 | 0.0 | 0.0 | 1.8 |
| | 37 | 13.3 | 1.4 | 2.1 | 0.0 | 0.0 | 7 | 0.9 | 0.1 | 1.2 | 1.4 | 7.1 | 1.4 | 0.0 | 0.0 | 0.0 | 0.0 | 3.8 |
| | 38 | 13.4 | 0.9 | 3.1 | 0.0 | 0.0 | 7 | 0.7 | 0.5 | 0.0 | 0.9 | 8.0 | 0.7 | 0.0 | 0.0 | 0.0 | 0.0 | 4.0 |
| | 39 | 11.7 | 0.3 | 0.0 | 1.7 | 0.0 | 6 | 0.5 | 0.5 | 0.0 | 0.8 | 8.6 | 0.3 | 1.8 | 0.0 | 0.0 | 0.0 | 4.9 |
| | 40 | 12.1 | 4.6 | 0.0 | 0.0 | 0.0 | 6 | 0.3 | 0.7 | 0.0 | 0.8 | 7.5 | 0.9 | 0.0 | 0.0 | 0.0 | 0.0 | 3.8 |

EP 2 952 287 B1

EP 2 952 287 B1

[Table 2]

| | No. | Chemical composition of covered electrode (mass%) | | | | | | | | | | | | Others in total * |
| | | Alloy components etc. | | | | | | | | | | Impurities etc. | | |
| | | C | Si | Mn | Cr | Mo | V | Nb | B | Mg | Fe | Cu+Ni+Ti+Al+Ta+Co+W | S+Sn+As+Sb+Pb+Bi | |
| Examples | 1 | 0.14 | 1.2 | 1.0 | 1.7 | 0.9 | 0.4 | 0.05 | 0.010 | 0.08 | 68 | 0.08 | 0.02 | 3.4 |
| | 2 | 0.04 | 1.1 | 1.0 | 1.9 | 0.8 | 0.5 | 0.02 | 0.011 | 0.09 | 68 | 0.04 | 0.02 | 4.5 |
| | 3 | 0.06 | 1.5 | 0.8 | 1.3 | 1.0 | 0.3 | 0.02 | 0.006 | 0.08 | 62 | 0.04 | 0.01 | 4.4 |
| | 4 | 0.09 | 1.3 | 0.7 | 1.3 | 0.6 | 0.5 | 0.04 | 0.008 | 0.10 | 63 | 0.05 | 0.02 | 3.8 |
| | 5 | 0.05 | 1.2 | 0.9 | 1.7 | 1.0 | 0.3 | 0.03 | 0.014 | 0:14 | 69 | 0.04 | 0.02 | 3.6 |
| | 6 | 0.13 | 1.1 | 1.0 | 1.5 | 0.9 | 0.4 | 0.06 | 0.005 | 0.12 | 66 | 0.06 | 0.01 | 5.3 |
| | 7 | 0.10 | 1.4 | 0.7 | 1.8 | 0.7 | 0.3 | 0.04 | 0.007 | 0.06 | 63 | 0.09 | 0.01 | 2.7 |
| | 8 | 0.07 | 1.2 | 1.0 | 1.7 | 0.8 | 0.4 | 0.04 | 0.009 | 0.09 | 65 | 0.04 | 0.03 | 5.6 |
| | 9 | 0.09 | 1.1 | 1.1 | 1.6 | 0.7 | 0.4 | 0.03 | 0.010 | 0.09 | 62 | 0.05 | 0.02 | 4.4 |
| | 10 | 0.05 | 1.3 | 0.8 | 1.3 | 0.9 | 0.3 | 0.05 | 0.007 | 0.06 | 63 | 0.04 | 0.02 | 4.6 |
| | 11 | 0.11 | 1.3 | 1.0 | 1.5 | 0.9 | 0.4 | 0.05 | 0.006 | 0.11 | 71 | 0.04 | 0.02 | 8.7 |
| | 12 | 0.13 | 1.3 | 1.1 | 1.4 | 0.8 | 0.4 | 0.05 | 0.005 | 0.09 | 61 | 0.08 | 0.02 | 0.6 |
| | 13 | 0.06 | 1.2 | 0.9 | 1.4 | 0.9 | 0.3 | 0.03 | 0.006 | 0.13 | 69 | 0.04 | 0.01 | 6.2 |
| | 14 | 0.09 | 1.0 | 1.2 | 1.9 | 0.7 | 0.5 | 0.02 | 0.009 | 0.08 | 62 | 0.03 | 0.04 | 4.3 |
| | 1b | 0.11 | 1.5 | 1.2 | 1.4 | 0.6 | 0.4 | 0.02 | 0.013 | 0.09 | 67 | 0.07 | 0.02 | 4.9 |
| | 16 | 0.14 | 1.2 | 1.0 | 1.4 | 0.5 | 0.4 | 0.03 | 0.009 | 0.10 | 64 | 0.03 | 0.03 | 5.2 |
| | 17 | 0.02 | 1.2 | 1.7 | 1.8 | 0.8 | 0.4 | 0.04 | 0.010 | 0.11 | 62 | 0.03 | 0.02 | 4.8 |
| | 18 | 0.21 | 1.1 | 0.9 | 1.8 | 0.8 | 0.5 | 0.03 | 0.009 | 0.13 | 64 | 0.06 | 0.02 | 4.1 |
| | 19 | 0.06 | 0.8 | 0.9 | 1.5 | 0.6 | 0.5 | 0.04 | 0.006 | 0.09 | 61 | 0.04 | 0.01 | 4.8 |
| | 20 | 0.07 | 1.8 | 1.0 | 1.7 | 0.8 | 0.4 | 0.05 | 0.006 | 0.05 | 64 | 0.05 | 0.02 | 5.5 |
| | 21 | 0.06 | 1.3 | 0.5 | 1.3 | 0.7 | 0.3 | 0.06 | 0.007 | 0.08 | 68 | 0.09 | 0.02 | 5.2 |
| | 22 | 0.05 | 1.4 | 1.4 | 1.6 | 0.9 | 0.5 | 0.06 | 0.011 | 0.11 | 61 | 0.10 | 0.02 | 3.8 |
| | 23 | 0.05 | 1.1 | 1.2 | 1.1 | 0.9 | 0.5 | 0.03 | 0.009 | 0.15 | 63 | 0.05 | 0.02 | 3.0 |

(continued)

| | No. | Chemical composition of covered electrode (mass%) | | | | | | | | | | | | Others in total * |
| --- | --- | --- | --- | --- | --- | --- | --- | --- | --- | --- | --- | --- | --- | --- |
| | | Alloy components etc. | | | | | | | | | | Impurities etc. | | |
| | | C | Si | Mn | Cr | Mo | V | Nb | B | Mg | Fe | Cu+Ni+Ti+Al+Ta+Co+W | S+Sn+As+Sb+Pb+Bi | |
| Comparative examples | 24 | 0.08 | 1.2 | 1.1 | 2.3 | 1.0 | 0.4 | 0.04 | 0.013 | 0.07 | 66 | 0.05 | 0.01 | 5.8 |
| | 25 | 0.07 | 1.2 | 1.2 | 1.3 | 0.3 | 0.3 | 0.03 | 0.006 | 0.09 | 67 | 0.08 | 0.02 | 4.5 |
| | 26 | 0.09 | 1.1 | 0.9 | 1.3 | 1.4 | 0.3 | 0.03 | 0.005 | 0.11 | 62 | 0.06 | 0.02 | 5.6 |
| | 27 | 0.08 | 1.4 | 0.8 | 1.9 | 0.5 | 0.1 | 0.05 | 0.013 | 0.10 | 63 | 0.04 | 0.02 | 5.1 |
| | 28 | 0.08 | 1.0 | 0.8 | 1.b | 0.5 | 0.7 | 0.06 | 0.012 | 0.06 | 62 | 0.09 | 0.02 | 3.3 |
| | 29 | 0.05 | 1.5 | 0.9 | 1.4 | 0.7 | 0.5 | 0.01 | 0.009 | 0.08 | 63 | 0.07 | 0.02 | 4.2 |
| | 30 | 0.07 | 1.3 | 1.2 | 1.5 | 0.9 | 0.4 | 0.08 | 0.005 | 0.13 | 64 | 0.05 | 0.01 | 4.5 |
| | 31 | 0.07 | 1.4 | 0.7 | 1.3 | 1.0 | 0.5 | 0.02 | 0.003 | 0.06 | 61 | 0.06 | 0.02 | 4.4 |
| | 32 | 0.06 | 1.3 | 1.0 | 1.4 | 0.7 | 0.4 | 0.03 | 0.020 | 0.06 | 60 | 0.07 | 0.03 | 5.2 |
| | 33 | 0.09 | 1.5 | 1.0 | 1.8 | 0.6 | 0.3 | 0.03 | 0.005 | 0.01 | 63 | 0.06 | 0.02 | 4.2 |
| | 34 | 0.11 | 1.2 | 0.8 | 1.6 | 0.7 | 0.4 | 0.04 | 0.006 | 0.23 | 61 | 0.08 | 0.01 | 5.2 |
| | 35 | 0.09 | 1.0 | 0.9 | 1.7 | 0.7 | 0.5 | 0.02 | 0.011 | 0.14 | 57 | 0.05 | 0.01 | 9.1 |
| | 36 | 0.12 | 1.0 | 0.9 | 1.4 | 0.9 | 0.5 | 0.05 | 0.015 | 0.09 | 77 | 0.05 | 0.02 | 1.0 |
| | 37 | 0.09 | 1.1 | 1.2 | 1.7 | 0.8 | 0.4 | 0.03 | 0.010 | 0.10 | 62 | 0.32 | 0.03 | 4.7 |
| | 38 | 0.10 | 1.2 | 0.9 | 1.5 | 0.9 | 0.3 | 0.05 | 0.011 | 0.12 | 63 | 1.06 | 0.02 | 3.6 |
| | 39 | 0.08 | 1.4 | 0.8 | 1.6 | 0.6 | 0.5 | 0.04 | 0.008 | 0.05 | 65 | 0.09 | 0.12 | 4.2 |
| | 40 | 0.07 | 1.0 | 1.1 | 1.5 | 1.0 | 0.5 | 0.06 | 0.009 | 0.08 | 64 | 0.06 | 0.16 | 4.3 |
| * Others in total: The total of additives not specified in Table 1 or 2, such as slag forming materials and arc stabilizers. | | | | | | | | | | | | | | |

[Welding Conditions]

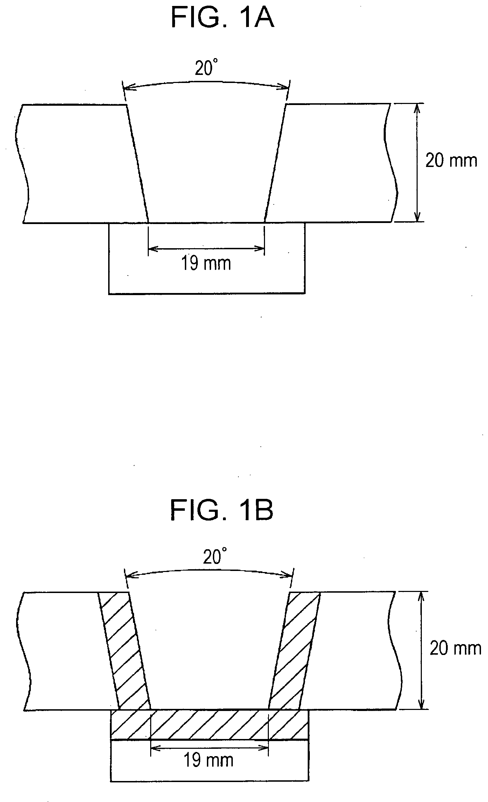

Fig. 1A illustrates the groove shape of a weld specimen used in the examples of the present application. The test plate may be formed of 2.25Cr-1Mo steel, such as ASTM A387 Gr.22 steel, or may be formed of carbon steel, such as JIS G3106 SM490A steel, having a groove face to which approximately two or three layers of a sample is applied by buttering, as illustrated in Fig. 1B. Because these test plates had the same test results, ASTM A387 Gr.22 Cl.2 steel having the matching composition was used in the examples of the present application. The test plates and a backing plate had a thickness of 20 mm. The groove shape was a 20-degree V groove. The root gap was 19 mm. The weld length ranged from 300 to 600 mm. Dual-pass per layer multi-pass welding was performed. The number of layers was 8.

Table 3 lists the welding conditions in the welding test. The power supply polarity in welding with covered electrodes is generally AC or DCEP. However, because deposited metal had the same performance for both power supply polarities in the welding test in the present application, all the test results in the examples were described for an AC power supply. Covered electrodes for Cr-Mo steel generally have a core wire diameter of 2.6, 3.2, 4.0, 5.0, or 6.0 mm$\phi$. However, because the performance of deposited metal of covered electrodes having any of the core wire diameters was the same in the welding test in the present application, all the test results in the examples were described for covered electrodes having a core wire diameter of 5.0 mm$\phi$. Flat position welding was employed in the welding test.

[Table 3]

Welding conditions

| Power polarity | Welding position | Welding current | Are voltage | Welding speed | Average heat input | Preheating-interpass temperature |
|---|---|---|---|---|---|---|
| AC | Flat position | 215 A | 24-26 V | 8-15 cm/min | 25-33 kJ/cm | 200°C-220°C |

[PWHT]

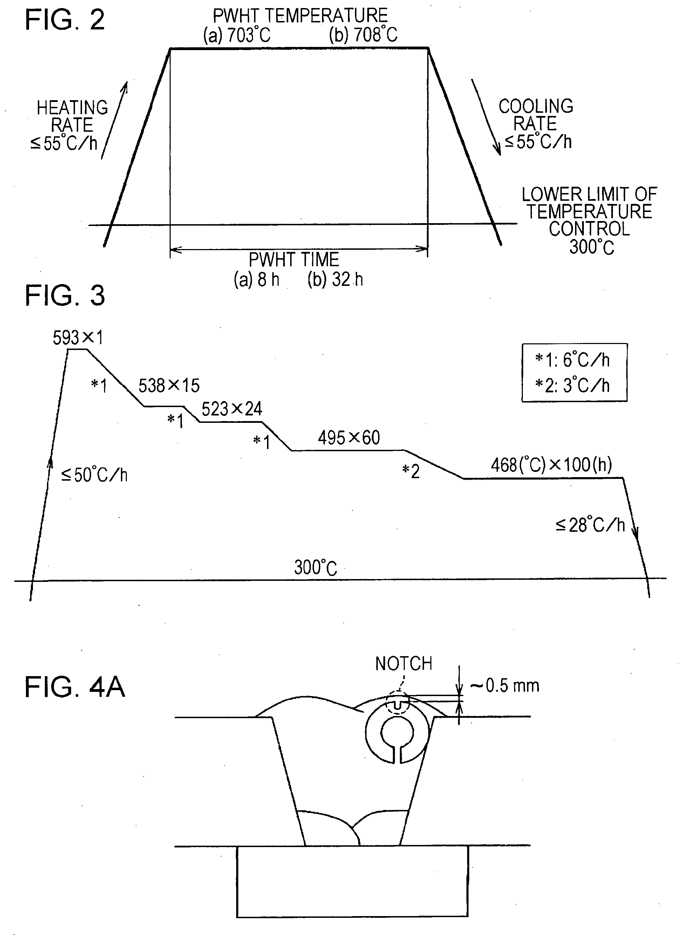

Fig. 2 illustrates the PWHT conditions for welding test materials. The intensity of PWHT can be quantified by introducing the concept of the Larson-Miller heat treatment parameter (hereinafter abbreviated to [P]). [P] is represented by the following equation 1, wherein T denotes the PWHT temperature (°C), and t denotes the PWHT time (h).
[Math. 1]

$$[P] = (T + 273) \times (20 + \log t) \times 10^{-3} \qquad (\text{Equation 1})$$

A higher PWHT temperature or a longer PWHT time results in a greater [P] and more annealed deposited metal. In particular, the strength of low-alloy heat-resistant steel exemplified by Cr-Mo steel is decreased by aggregation and coarsening of carbonitride that has a significant role in securing the strength. On the other hand, owing to a greater [P] and lower strength of deposited metal, the toughness of the deposited metal is inversely improved. However, excessive aggregation and coarsening of carbonitride sometimes result in low toughness because coarse carbonitride acts as a starting point for brittle fracture. The strength and toughness tend to be almost linearly correlated with [P]. The high-temperature strength exemplified by creep rupture strength has substantially the same tendency.

The PWHT conditions in the present application include (1) 705 ($\pm$ 15)°C $\times$ 8 ($\pm$ 1) h and (2) 705 ($\pm$ 15)°C $\times$ 32 ($\pm$ 1) h. The corresponding [P] ranges from (1) 20.07 to 20.81 and (2) 20.70 to 21.37.

Test materials subjected to a particular embrittlement promoting heat treatment called step cooling (S.C.) (Fig. 3) described below were used to evaluate the temper embrittlement characteristics of deposited metal: wherein

Min. PWHT (703°C $\times$ 8 h): Charpy impact test (the conditions (a) in Fig. 2)
Min. PWHT (703°C $\times$ 8 h) + S.C.: Charpy impact test (for evaluation of temper embrittlement characteristics)
Max. PWHT (708°C $\times$ 32 h): Creep rupture test (the conditions (b) in Fig. 2).

<Step Cooling>

The step cooling will be described below. Fig. 3 is a graph of the step cooling treatment conditions. The vertical axis represents temperature, and the horizontal axis represents time. As illustrated in Fig. 3, a sample was heated in step cooling. When the sample temperature exceeded 300°C, the heating conditions were adjusted such that the heating rate was 50°C/h or less. The sample was heated to a temperature of 593°C. The sample was held at 593°C for 1 hour. The sample was then cooled to 538°C at a cooling rate of 6°C/h and was held at the temperature for 15 hours. The sample was then cooled to 523°C at the same cooling rate and was held at the temperature for 24 hours. The sample was then cooled to 495°C at the same cooling rate and was held at the temperature for 60 hours. The sample was then cooled to 468°C at a cooling rate of 3°C/h and was held at the temperature for 100 hours. The sample was then cooled to 300°C or less at a cooling rate of 28°C/h or less. In this treatment, when the sample temperature was 300°C or less, the heating rate and the cooling rate were not specified.

[Toughness and Temper Embrittlement Characteristics (Charpy Impact Test)]

In order to evaluate the toughness and temper embrittlement characteristics of deposited metal, ISO 148-1 2-mm V-notch Charpy impact test pieces were sampled from test materials treated under the PWHT conditions of 703°C × 8 h and 703°C × 8 h + step cooling, and were subjected to a Charpy impact test at temperatures of 20°C, 0°C, -18°C, -30°C, -50°C, -70°C, and -90°C. Three test pieces were tested at each temperature. The Charpy transition temperatures for 54 J (hereinafter referred to as vTr54 and vTr'54) were determined from transition curves smoothly passing through test values obtained at each temperature. The variation in vTr54 due to the step cooling (= vTr'54 - vTr54, hereinafter referred to as ΔvTr54) was calculated as the degree of embrittlement.

The temper embrittlement susceptibility of weld metal is judged from vTr54 and ΔvTr54 as a whole. The sum of vTr54 and three times the ΔvTr54 (= vTr54 + 3ΔvTr54) was defined as a temper embrittlement characteristic value. This is because the step cooling is an accelerated test, and in consideration of several decades of service life of real apparatuses, the embrittlement of deposited metal on real apparatuses is estimated to be three times the degree of embrittlement due to step cooling. The Charpy transition temperature for 54 J of deposited metal after operation for extended periods is roughly calculated from the temper embrittlement characteristic value. In the same manner as creep properties, the factor of ΔvTr54 (3 in the present application) is increasing (more stringent) year by year, for example, 1.5 → 2.0 → 2.5 → 3.0. Practically, the factor of 3 is currently the most severe. A large vTr54 is unfavorable for applied portions of the deposited metal that require high and stable weld quality because vTr54 + 3ΔvTr54 is also large even when the degree of embrittlement (= ΔvTr54) is small. A high degree of embrittlement (= ΔvTR54) results in an increase in vTr54 + 3ΔvTr54 and is also unfavorable for the same reason even when the toughness after PWHT (= vTr54) is high.

In the present example, the toughness was rated good (double circle) when the average of three impact values at -30°C (hereinafter referred to as vE-30°C) was 100 J or more, fair (circle) when vE-30°C was 80 J or more and less than 100 J, or poor (cross) when vE-30°C was less than 80 J.

The degree of embrittlement was rated good (double circle) when ΔvTr54 was 5°C or less, fair (circle) when ΔvTr54 was more than 5°C and less than 11°C, or poor (cross) when ΔvTr54 was 11°C or more.

The temper embrittlement characteristic value was rated good (double circle) when vTr54 + 3ΔvTr54 was -30°C or less, fair (circle) when vTr54 + 3ΔvTr54 was more than -30°C and 0°C or less, or poor (cross) when vTr54 + 3ΔvTr54 was more than 0°C.

In the present embodiment,

vTr54: Charpy transition temperature (°C) for 54 J after PWHT,
vTr'54: Charpy transition temperature (°C) for 54 J after PWHT + step cooling,
ΔvTr54 (= vTr'54 - vTr54): Degree of embrittlement (°C) due to step cooling, and
vTr54 + 3ΔvTr54: Temper embrittlement characteristics (°C).

[Creep Rupture Test]

ISO 204 creep rupture test specimens were sampled from welding test materials treated under the PWHT conditions of 708°C × 32 h and were subjected to a creep rupture test at a test temperature of 540°C and at a load stress of 210 MPa. The rupture time was measured. In the present example, test specimens were rated good (double circle) when the rupture time (hereinafter referred to as Tr) was 1500 h or more, fair (circle) when Tr was less than 1500 h and 1000 h or more, or poor (cross) when Tr was less than 1000 h.

[SR Cracking Resistance Evaluation Test (Ring Crack Test)]

In the manufacture of a pressure vessel made of low-alloy heat-resistant steel, such as Cr-Mo steel, principally in order to decrease the residual stress of the structure under construction, stress relief annealing (SR) is often performed before PWHT. SR cracking is cracking in prior γ grain boundaries during SR. Carbide precipitation in crystal grains and impurity segregation in prior γ grain boundaries due to SR cause an excessive strength difference at the interface between the interior of the crystal grains and the prior γ grain boundaries. When the relatively weakened prior γ grain boundaries cannot withstand the residual stress, SR cracking occurs.

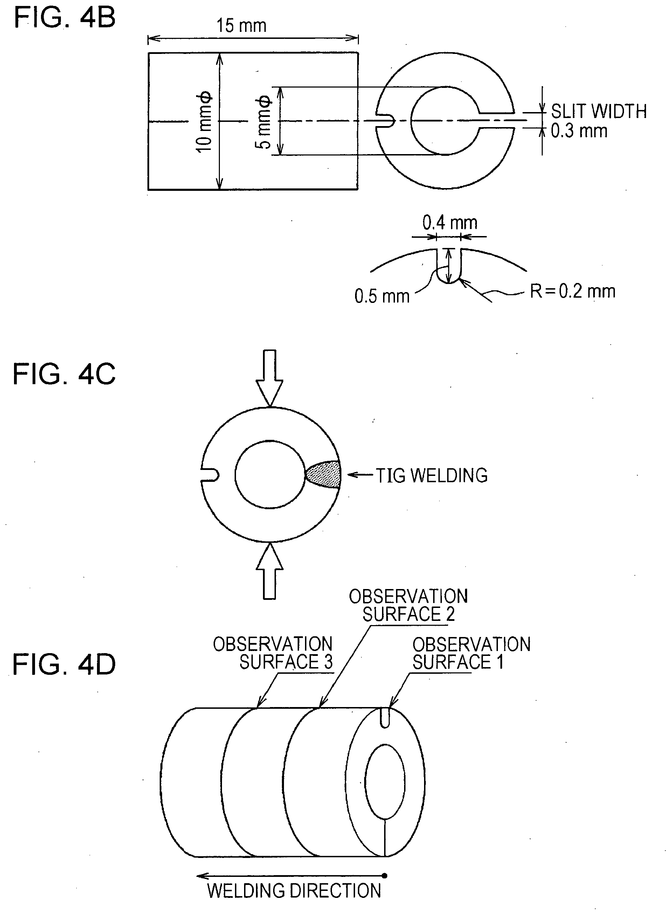

The SR cracking resistance of deposited metal in the present application was evaluated by a test method called a ring crack test. A ring test specimen having a U groove (U-notch) and a slit (slit width: 0.3 mm) was sampled from an as-welded welding test material at a position illustrated in Fig. 4A (= a position at which a final pass unaffected zone was located directly under the U-notch). The number of test specimens was two. Fig. 4B illustrates the shape of the test specimen.

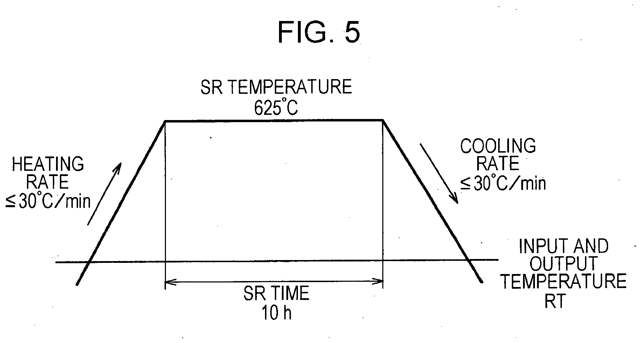

As illustrated in Fig. 4C, while the slit width was decreased to approximately 0.05 mm, the slit was TIG welded to apply residual stress to a portion directly under the U-groove. After the TIG welding, the test specimen was subjected to SR under the conditions illustrated in Fig. 5 (625°C $\times$ 10 h). As illustrated in Fig. 4D, the test specimen was then divided into three in the longitudinal direction. A portion directly under the notch in each cross section was checked for the occurrence of SR in prior $\gamma$ grain boundaries. The SR cracking resistance was rated good (double circle) when no SR crack was observed in the 6 cross sections (= 3 observation surfaces $\times$ 2 test specimens), fair (circle) when SR cracks were observed in 1 or 2 of the 6 cross sections, or poor (cross) when SR cracks were observed in 3 or more of the 6 cross sections.

[Welding Performance]

Welding performance was organoleptically evaluated in a welding test under the welding conditions listed in Table 2. First, "arc stability" was rated good (double circle), fair (circle), and poor (cross) when arc tended to flutter slightly, moderately, and greatly, respectively. Second, "amount of spatter" was rated good (double circle), fair (circle), and poor (cross) when spatters tended to occur infrequently, occasionally, and frequently, respectively. Third, "slag detachability" was rated good (double circle) when slag was easily detached, fair (circle) when slag was relatively easily detached, or poor (cross) when slag was difficult to detach. Fourth, "bead wetting" was rated good (double circle), fair (circle), and poor (cross) for very weak, weak, and strong slag inclusion tendencies at bead toes, respectively. Fifth, "bead appearance" was rated good (double circle) when the bead was very fine and flat, fair (circle) when the bead was fine and flat, or poor (cross) when the bead was wavy and rough.

Table 4 shows the results.

[Table 4]

| | Mechanical properties of deposited metal | | | | | | | | | Welding performance | | | | | | | |
| No. | Toughness vE-30°C (J) | Rating | Degree of embrittlement ΔvTr54(°C) | Rating | Temper embrittlement characteristics vTr54+3ΔvTr54 (°C) | Rating | Creep rupture properties Tr (h) | Rating | SR cracking resistance | Arc stability | Amount of spatter | Slag detachability | Bead wetting | Bead appearance | Overall rating | Overall rating |
|---|---|---|---|---|---|---|---|---|---|---|---|---|---|---|---|---|
| 1 | 95 | ○ | 8 | ○ | -21 | ○ | 1639 | ⊙ | ○ | ○ | ○ | ○ | ○ | ○ | Good | ○ |
| 2 | 122 | ⊙ | 10 | ○ | -19 | ○ | 1023 | ○ | ○ | ○ | ○ | ○ | ○ | ○ | Good | ○ |
| 3 | 98 | ○ | 8 | ○ | -24 | ○ | 1321 | ○ | ○ | ○ | ○ | ○ | ○ | ○ | Good | ○ |
| 4 | 87 | ○ | 7 | ○ | -23 | ○ | 1522 | ⊙ | ○ | ○ | ○ | ○ | ○ | ○ | Good | ○ |
| 5 | 96 | ○ | 9 | ○ | -21 | ○ | 1116 | ○ | ○ | ○ | ⊙ | ○ | ○ | ○ | Good | ○ |
| 6 | 105 | ⊙ | 6 | ○ | -34 | ⊙ | 1403 | ○ | ○ | ○ | ⊙ | ○ | ○ | ○ | Good | ○ |
| 7 | 83 | ○ | 9 | ○ | -16 | ○ | 1565 | ⊙ | ⊙ | ○ | ○ | ○ | ○ | ○ | Good | ○ |
| 8 | 134 | ⊙ | 1 | ⊙ | -49 | ⊙ | 1833 | ⊙ | ⊙ | ⊙ | ⊙ | ○ | ⊙ | ○ | Good | ⊙ |
| 9 | 112 | ⊙ | 5 | ⊙ | -40 | ⊙ | 1644 | ⊙ | ⊙ | ○ | ○ | ○ | ○ | ○ | Good | ⊙ |
| 10 | 125 | ⊙ | 4 | ⊙ | -48 | ⊙ | 1529 | ⊙ | ⊙ | ○ | ⊙ | ○ | ○ | ○ | Good | ⊙ |
| 11 | 88 | ○ | 8 | ○ | -21 | ○ | 1013 | ○ | ○ | ○ | ○ | ○ | ○ | × | Poor | × |
| 12 | 91 | ○ | 9 | ○ | -19 | ○ | 1129 | ○ | ○ | ○ | ○ | × | × | × | Poor | × |
| 13 | 85 | ○ | 8 | ○ | -14 | ○ | 1083 | ○ | ○ | × | ○ | ○ | ○ | × | Poor | × |
| 14 | 87 | ○ | 6 | ○ | -26 | ○ | 1265 | ○ | ○ | × | × | ○ | ○ | × | Poor | × |
| 15 | 95 | ○ | 9 | ○ | -17 | ○ | 1098 | ○ | ○ | ○ | ○ | ○ | × | × | Poor | × |
| 16 | 88 | ○ | 4 | ⊙ | -25 | ○ | 1211 | ○ | ○ | ○ | ○ | ○ | ○ | × | Poor | × |
| 17 | 72 | × | 14 | × | 5 | × | 783 | × | × | × | ○ | ○ | ○ | ⊙ | Good | × |
| 18 | 51 | × | 11 | × | 6 | × | 1689 | ⊙ | ○ | ○ | ○ | ○ | ○ | ○ | Poor | × |
| 19 | 71 | × | 11 | × | -4 | ○ | 881 | × | ○ | ○ | ○ | ○ | × | × | Poor | × |
| 20 | 83 | ○ | 16 | × | 6 | × | 1116 | ○ | ○ | ○ | ○ | ○ | ⊙ | ⊙ | Good | × |

Examples

| | No. | Mechanical properties of deposited metal | | | | | | | | | Welding performance | | | | | | Overall rating |
| | | Toughness | | Degree of embrittlement | | Temper embrittlement characteristics | | Creep rupture properties | | SR cracking resistance | Arc stability | Amount of spatter | Slag detachability | Bead wetting | Bead appearance | Overall rating | |
| | | vE-30°C (J) | Rating | ΔvTr54(°C) | Rating | vTr54+3ΔvTr54 (°C) | Rating | Tr (h) | Rating | | | | | | | | |
| Comparative examples | 21 | 49 | × | 4 | ⊙ | -15 | ○ | 1389 | ○ | ○ | ○ | ○ | ○ | ○ | ○ | Good | × |
| | 22 | 132 | ⊙ | 22 | × | 2 | × | 772 | × | ○ | ○ | ○ | ○ | ⊙ | ⊙ | Good | × |
| | 23 | 63 | × | 8 | ○ | -11 | ○ | 1554 | ⊙ | × | ○ | ○ | ○ | ○ | ○ | Good | × |
| | 24 | 74 | × | 15 | × | 8 | × | 547 | × | × | ○ | ○ | ○ | ○ | ○ | Good | × |
| | 25 | 96 | ○ | 8 | ○ | -18 | ○ | 66b | × | ○ | ○ | ○ | ○ | ○ | ○ | Good | × |
| | 26 | 67 | × | 8 | ○ | -12 | ○ | 1023 | ○ | ○ | ○ | ○ | ○ | ○ | ○ | Good | × |
| | 27 | 93 | ○ | 8 | ○ | -23 | ○ | 528 | × | ⊙ | ○ | ○ | ○ | ○ | ○ | Good | × |
| | 28 | 47 | × | 9 | ○ | 2 | × | 1981 | ⊙ | × | × | × | ○ | ○ | × | Poor | × |
| | 29 | 98 | ○ | 10 | ○ | -18 | ○ | 792 | × | ⊙ | ○ | ○ | ○ | ○ | ○ | Good | × |
| | 30 | 73 | × | 15 | × | 6 | × | 1766 | ⊙ | × | ○ | × | ○ | ○ | ○ | Poor | × |
| | 31 | 74 | × | 6 | ○ | -22 | ○ | 784 | × | ⊙ | ○ | ○ | ○ | ○ | ○ | Good | × |
| | 32 | 121 | ⊙ | 9 | ○ | -32 | ⊙ | 1563 | ⊙ | × | ○ | ○ | ○ | ⊙ | ○ | Good | × |
| | 33 | 69 | × | 9 | ○ | -6 | ○ | 1129 | ○ | ○ | × | × | ○ | ○ | ○ | Poor | × |
| | 34 | 87 | ○ | 6 | ○ | -26 | ○ | 1098 | ○ | U | × | × | ○ | ○ | × | Poor | × |
| | 3b | 58 | × | 10 | ○ | 1 | × | 837 | × | ○ | ○ | ○ | × | ○ | × | Poor | × |
| | 36 | 75 | × | 13 | × | 2 | × | 691 | × | U | ○ | ○ | ○ | ○ | ○ | Good | × |
| | 37 | 72 | × | 9 | ○ | -8 | ○ | 855 | × | ○ | ○ | × | ○ | ○ | ○ | Poor | × |
| | 38 | 48 | × | 13 | × | 14 | × | 691 | × | × | × | × | ○ | ○ | ○ | Poor | × |
| | 39 | 92 | ○ | 17 | × | 4 | × | 1026 | ○ | × | ○ | ○ | ○ | ○ | ○ | Good | × |
| | 40 | 94 | ○ | 19 | × | 10 | × | 1109 | ○ | × | ○ | ○ | ○ | ○ | ○ | Good | × |

Table 4 shows that Nos. 1 to 10 within the scope of the present invention had good results with respect to all the evaluation items.

By contrast, Nos. 11 to 40 outside the scope of the present invention had the following results.

Nos. 11 to 16, in which any of a metal carbonate on a $CO_2$ basis, an alkali metal oxide on an alkali metal basis, and a fluorine compound on a F basis was outside the scope of the present invention, had poor welding performance. No. 17, which had a C content below the lower limit, had low ratings with respect to toughness, the degree of embrittlement, temper embrittlement characteristics, and creep rupture properties. No. 18, which had a C content above the upper limit, had low ratings with respect to toughness, the degree of embrittlement, temper embrittlement characteristics, SR cracking resistance, and welding performance.

No. 19, which had a Si content below the lower limit, had low ratings with respect to toughness, the degree of embrittlement, creep rupture properties, and welding performance. No. 20, which had a Si content above the upper limit, had low ratings with respect to the degree of embrittlement and temper embrittlement characteristics. No. 21, which had a Mn content below the lower limit, had a low rating with respect to toughness. No. 22, which had a Mn content above the upper limit, had low ratings with respect to the degree of embrittlement, temper embrittlement characteristics, and creep rupture properties. No. 23, which had a Cr content below the lower limit, had low ratings with respect to toughness and SR cracking resistance. No. 24, which had a Cr content above the upper limit, had low ratings with respect to toughness, the degree of embrittlement, temper embrittlement characteristics, creep rupture properties, and SR cracking resistance.

No. 25, which had a Mo content below the lower limit, had a low rating with respect to creep rupture properties. No. 26, which had a Mo content above the upper limit, had a low rating with respect to toughness. No. 27, which had a V content below the lower limit, had a low rating with respect to creep rupture properties. No. 28, which had a V content above the upper limit, had low ratings with respect to toughness, temper embrittlement characteristics, SR cracking resistance, and welding performance. No. 29, which had a Nb content below the lower limit, had a low rating with respect to creep rupture properties. No. 30, which had a Nb content above the upper limit, had low ratings with respect to toughness, the degree of embrittlement, temper embrittlement characteristics, SR cracking resistance, and welding performance.

No. 31, which had a B content below the lower limit, had low ratings with respect to toughness and creep rupture properties. No. 32, which had a B content above the upper limit, had a low rating with respect to SR cracking resistance. No. 33, which had a Mg content below the lower limit, had low ratings with respect to toughness and welding performance. No. 34, which had a Mg content above the upper limit, had a low rating with respect to welding performance. No. 35, which had an Fe content below the lower limit, had low ratings with respect to toughness, temper embrittlement characteristics, creep rupture properties, and welding performance. No. 36, which had an Fe content above the upper limit, had low ratings with respect to toughness, the degree of embrittlement, temper embrittlement characteristics, and creep rupture properties.

No. 37, in which the total amount of Cu, Ni, Ti, Al, Ta, Co, and W exceeded the upper limit, had low ratings with respect to toughness, creep rupture properties, and welding performance. No. 38, in which the total amount of Cu, Ni, Ti, Al, Ta, Co, and W exceeded the upper limit, had low ratings with respect to toughness, the degree of embrittlement, temper embrittlement characteristics, creep rupture properties, SR cracking resistance, and welding performance. No. 39, in which the total amount of S, Sn, As, Sb, Pb, and Bi exceeded the upper limit, had low ratings with respect to the degree of embrittlement, temper embrittlement characteristics, and SR cracking resistance. No. 40, in which the total amount of S, Sn, As, Sb, Pb, and Bi exceeded the upper limit, had low ratings with respect to the degree of embrittlement, temper embrittlement characteristics, and SR cracking resistance. The present invention is described in detail with the embodiments and the examples. The scope of rights of the present invention is determined by the appended claims. The description and drawings shall be used to interpret the claims.

**Claims**

1. A covered electrode comprising, based on the total mass of the covered electrode:

    5% to 10% by mass metal carbonate on a $CO_2$ basis, 0.4% to 2.0% by mass alkali metal oxide on an alkali metal basis, and 1.0% to 5.0% by mass fluorine compound on a F basis in a covering of the covered electrode; and C: 0.04% to 0.15% by mass, $S_i$: 1.0% to 1.5% by mass, Mn: 0.7% to 1.2% by mass, Cr: 1.3% to 1.9% by mass, Mo: 0.5% to 1.0% by mass, V: 0.3% to 0.5% by mass, Nb: 0.02% to 0.06% by mass, B: 0.005% to 0.015% by mass, Mg: 0.05% to 0.15% by mass, and Fe: 60% to 75% by mass in one of a core wire and the covering of the covered electrode or in both of the core wire and the covering in total; and incidental impurities, the incidental impurities being 0.10% or less by mass Cu, Ni, Ti, Al, Ta, Co, and W in total and 0.10% or less by mass S, Sn, As, Sb, Pb, and Bi in total.

2. The covered electrode according to Claim 1, wherein the covered electrode contains, based on the total mass of the covered electrode, C: 0.05% to 0.10% by mass, Si: 1.0% to 1.3% by mass, Mn: 0.8% to 1.2% by mass, Cr: 1.3% to 1.9% by mass, Mo: 0.5% to 1.0% by mass, V: 0.3% to 0.5% by mass, Nb: 0.02% to 0.06% by mass, B: 0.005% to 0.015% by mass, Mg: 0.05% to 0.10% by mass, and Fe: 60% to 75% by mass in one of the core wire and the covering of the covered electrode or in both of the core wire and the covering in total, and incidental impurities, the incidental impurities being 0.10% or less by mass Cu, Ni, Ti, Al, Ta, Co, and W in total and 0.10% or less by mass S, Sn, As, Sb, Pb, and Bi in total.

**Patentansprüche**

1. Beschichtete Elektrode, umfassend, basierend auf der Gesamtmasse der beschichteten Elektrode:

   5 bis 10 Massenprozent Metallcarbonat auf einer $CO_2$-Basis, 0,4 bis 2 Massenprozent Alkalimetalloxid auf einer Alkalimetallbasis, und 1,0 bis 5,0 Massenprozent Fluorverbindung auf einer F-Basis in einer Beschichtung der beschichteten Elektrode; und
   C: 0,04 - 0,15 Massenprozent, Si: 1,0 bis 1,5 Massenprozent, Mn: 0,7 bis 1,2 Massenprozent, Cr: 1,3 bis 1,9 Massenprozent, Mo: 0,5 bis 1,0 Massenprozent, V: 0,3 bis 0,5 Massenprozent, Nb: 0,02 bis 0,06 Massenprozent, B: 0,005 bis 0,015 Massenprozent, Mg: 0,05 bis 0,15 Massenprozent, und Fe: 60 bis 75 Massenprozent in einem von einem Kerndraht und der Beschichtung der beschichteten Elektrode oder insgesamt in sowohl dem Kerndraht und der Beschichtung; und
   zufällige Verunreinigungen, wobei die zufälligen Verunreinigungen insgesamt 0,10 Massenprozent oder weniger an Cu, Ni, Ti, Al, Ta, Co und W, und insgesamt 0,10 Massenprozent oder weniger an S, Sn, As, Sb, Pb, und Bi, betragen.

2. Beschichtete Elektrode nach Anspruch 1, wobei die beschichtete Elektrode, basierend auf der Gesamtmasse der beschichteten Elektrode,
   C: 0.05% bis 0,10 Massenprozent, Si: 1,0 bis 1,3 Massenprozent, Mn: 0,8 bis 1,2 Massenprozent, Cr: 1,3 bis 1,9 Massenprozent, Mo: 0,5 bis 1,0 Massenprozent, V: 0,3 bis 0,5 Massenprozent, Nb: 0,02 bis 0,06 Massenprozent, B: 0,005 bis 0,015 Massenprozent, Mg: 0,05 bis 0,10 Massenprozent, und Fe: 60 bis 75 Massenprozent in einem von dem Kerndraht und der Beschichtung der beschichteten Elektrode oder insgesamt in sowohl dem Kerndraht und der Beschichtung, und
   zufällige Verunreinigungen, wobei die zufälligen Verunreinigungen insgesamt 0,10 Massenprozent oder weniger an Cu, Ni, Ti, Al, Ta, Co, und W und insgesamt 0,10 Massenprozent oder weniger an S, Sn, As, Sb, Pb, und Bi, betragen, enthält.

**Revendications**

1. Électrode enrobée comprenant, sur la base de la masse totale de l'électrode enrobée :

   5% à 10% en masse d'un carbonate de métal sur une base de $CO_2$, 0,4% à 2,0% en masse d'un oxyde de métal alcalin sur une base de métal alcalin, et 1,0% à 5,0% en masse d'un composé fluoré sur une base de F dans un enrobage de l'électrode enrobée ; et
   C : 0,04% à 0,15% en masse, Si : 1,0% à 1,5% en masse, Mn : 0,7% à 1,2% en masse, Cr : 1,3% à 1,9% en masse, Mo : 0,5% à 1,0% en masse, V : 0,3% à 0,5% en masse, Nb : 0,02% à 0,06% en masse, B : 0,005% à 0,015% en masse, Mg : 0,05% à 0,15% en masse et Fe : 60% à 75% en masse dans l' un d' un fil d'âme et de l'enrobage de l'électrode enrobée ou dans les deux du fil d'âme et de l'enrobage au total ; et
   des impuretés accidentelles, les impuretés accidentelles étant de 0,10% ou moins en masse de Cu, Ni, Ti, Al, Ta, Co et W au total et de 0,10% ou moins en masse de S, Sn, As, Sb, Pb et Bi au total.

2. Électrode enrobée selon la revendication 1, dans laquelle l'électrode enrobée contient, sur la base de la masse totale de l'électrode enrobée, C : 0,05% à 0,10% en masse, Si : 1,0% à 1,3% en masse, Mn : 0,8% à 1,2% en masse, Cr : 1,3% à 1,9% en masse, Mo : 0,5% à 1,0% en masse, V : 0,3% à 0,5% en masse, Nb : 0,02% à 0,06% en masse, B : 0,005% à 0,015% en masse, Mg : 0,05% à 0,10% en masse et Fe : 60% à 75% en masse dans l'un du fil d'âme et de l'enrobage de l'électrode enrobée ou dans les deux du fil d'âme et de l'enrobage au total, et des impuretés accidentelles, les impuretés accidentelles étant de 0,10% ou moins en masse de Cu, Ni, Ti, Al, Ta, Co et W au total et de 0,10% ou moins en masse de S, Sn, As, Sb, Pb et Bi au total.

# FIG. 1A

# FIG. 1B

FIG. 2

PWHT TEMPERATURE
(a) 703°C          (b) 708°C

HEATING RATE ≤55°C/h

COOLING RATE ≤55°C/h

LOWER LIMIT OF TEMPERATURE CONTROL 300°C

PWHT TIME
(a) 8 h    (b) 32 h

FIG. 3

593×1

*1    538×15

*1    523×24

*1    495×60

468(°C)×100(h)

*2

*1: 6°C/h
*2: 3°C/h

≤50°C/h

≤28°C/h

300°C

FIG. 4A

NOTCH

~0.5 mm

20

FIG. 4B

15 mm

10 mmφ

5 mmφ

SLIT WIDTH
0.3 mm

0.4 mm

0.5 mm

R = 0.2 mm

FIG. 4C

TIG WELDING

FIG. 4D

OBSERVATION
SURFACE 2

OBSERVATION
SURFACE 3

OBSERVATION
SURFACE 1

WELDING DIRECTION

21

# FIG. 5

SR TEMPERATURE
625°C

HEATING
RATE
≤30°C/min

COOLING
RATE
≤30°C/min

INPUT AND
OUTPUT
TEMPERATURE
RT

SR TIME
10 h

**REFERENCES CITED IN THE DESCRIPTION**

**Patent documents cited in the description**

- JP 10137975 A
- JP 2002263883 A
- JP 2001300768 A
- JP 0626227 A